# EUROPÄISCHE PATENTSCHRIFT

(11) **EP 1 621 155 B1**
(45) Veröffentlichungstag und Bekanntmachung des Hinweises auf die Patenterteilung: **26.01.2011**
(21) Anmeldenummer: 04405479.9
(22) Anmeldetag: 28.07.2004
(51) Int. Cl.: A61C 5/04, A61C 13/30

(54) **Zahnwurzelkanal-Spitze**
Dental root point
Pointe pour canal radiculaire

(43) Veröffentlichungstag der Anmeldung: 01.02.2006
(73) Patentinhaber: Nordin, Harald E., CH-1822 Chernex (CH)
(72) Erfinder: Nordin, Harald E., CH-1822 Chernex (CH)
(74) Vertreter: AMMANN PATENTANWÄLTE AG BERN

(56) Entgegenhaltungen:
- US-A- 4 525 147
- US-A- 5 328 372
- US-B1- 6 371 763

## Beschreibung

Die vorliegende Erfindung bezieht sich auf eine Zahnwurzelkanal-Spitze, die dazu geeignet ist, nach einer Wurzelbehandlung den Zahnwurzelkanal zu füllen. Gemäss Stand der Technik werden dazu hauptsächlich Zahnwurzelkanal-Spitzen aus Gutta Percha verwendet, d. h. aus einer Masse, die flexibel genug ist, den Krümmungen eines Zahnwurzelkanals zu folgen. Vorgängig wird der Zahnwurzelkanal mit Bohrer und Feilen vorbereitet und in eine gewünschte Form gebracht, dann wird die Gutta-Percha Spitze erhitzt und eingeführt. Sowohl die Feilen als auch die Spitzen sind übereinstimmend standardisiert und genormt. Infolge der Erwärmung kann das Gutta Percha beschränkt in Dentin-Risse und in feine Kanäle eindringen.

Es sind auch Zahnwurzelkanal-Spitzen aus Papier bekannt und für die temporäre Behandlung aus Calcium-Hydroxid.

Aus der US-A-5 564 929 ist eine flexible, seilartige Zahnprothese bekannt, wobei dieses Seil aus Glas-, Keramik-, Kohlenstofffasern oder anderen Fasern bestehen kann. Das Seil wird mittels einem Versteifungsmittel behandelt, in den Zahnwurzelkanal eingeführt, wo es versteift.

Aus der US-A-4 525 147 ist ein Zahnwurzelkanal-Implantat bekannt, das Kohlenstofffasern enthält, um eine elektrische Leitfähigkeitsmessung durchzuführen, damit der Abstand des Implantats zur Kanal-Spitze gemessen werden kann.

Allen Zahnwurzelkanal-Spitzen ist gemeinsam, dass sie keine hohe Festigkeit aufweisen und daher zwar den Zahnwurzelkanal aufzufüllen vermögen, jedoch dem geschwächten Zahn nach Entfernung der Pulpa nicht grössere Festigkeit verleihen.

US-B-6 371 763 beschreibt eine Zahnwurzelkanalspitze bestehend aus Glasfasern, die von einer Kunstharzmatrix zusammengehalten werden. Dieser flexible Zahnwurzelkanastift hat ein Elastizitätsmodul, das kleiner oder gleich dem Elastizitätsmodul von Dentin ist.

Es ist Aufgabe der vorliegenden Erfindung, eine Zahnwurzelkanal-Spitze anzugeben, die dem Zahn höhere Festigkeit verleiht. Diese Aufgabe wird mit der Zahnwurzelkanal-Spitze gemäss Patentanspruch 1 gelöst.

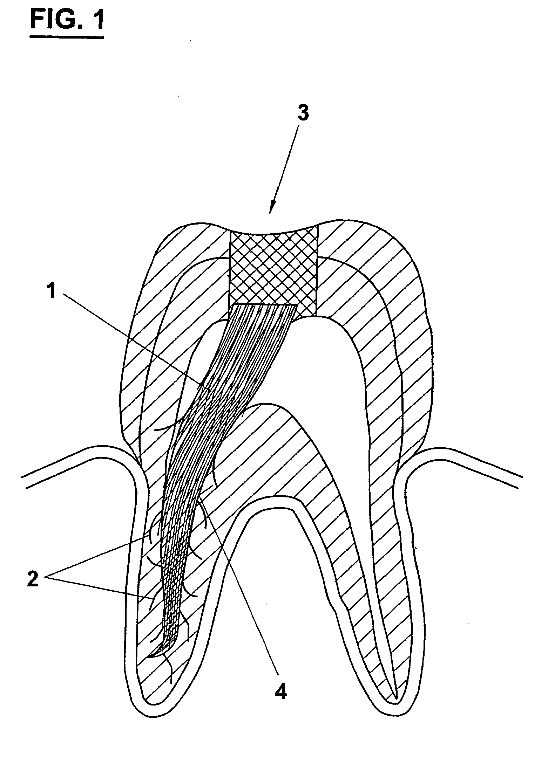

Die Erfindung wird im Folgenden anhand einer Zeichnung eines Ausführungsbeispiels näher erläutert, wobei die einzige Figur 1 schematisch und im Schnitt eine erfindungsgemässe Zahnwurzelkanal-Spitze in einem Zahn zeigt.

Die Zahnwurzelkanal-Spitze 1 besteht aus faserverstärktem Kunststoff, wobei es sich um Glas-, Kohlenstoff- oder Keramikfasern 2 handeln kann. Die Fasern sind etwa parallel zueinander angeordnet und werden mittels einem geeigneten Kunststoff, bzw. Kunstharz zusammengehalten, jedoch nur soweit, dass eine notwendige Flexibilität erhalten bleibt und auch Fasern oder Faserstränge in seitliche Risse oder dergleichen des Zahnwurzelkanals 4 von Zahn 3 eindringen können. Aus der Figur geht hervor, dass der Zahnwurzelkanal-Stift den gekrümmten Zahnwurzelkanal zu folgen vermag.

Zwecks besserer Haftung der Fasern mit dem Kunstharz werden diese mit einer geeigneten Kunststoffschicht überzogen, z. B. mit einer Schicht aus Vinyl-Silan. Im Prinzip sollten die erfindungsgemässen Spitzen die etwa gleichen Standardnormen aufweisen wie die Gutta Percha Spitzen, jedoch mit etwas kleineren Dimensionen, um den Zement zu berücksichtigen.

Zum Einsetzen der Spitze wird ein Knochenzement verwendet, wodurch nach Aushärten desselben die faserverstärkte Zahnwurzelkanal-Spitze verfestigt ist und damit dem Zahn eine wesentlich höhere Festigkeit verleiht, als mit vorbekannten Zahnwurzelkanal-Spitzen. Bei entprechender Auswahl der einzelnen Komponenten, Spitze und Zement, können diese etwa das gleiche Elastizitätmodul wie der Zahn aufweisen.

Das Einsetzen solcher erfindungsgemässen Spitzen erfolgt auf der gleichen Art wie das Einsetzen von vorbekannten Spitzen und erfordert daher keine anderen, neuen Instrumente und keine neue Arbeitsweise.

## Patentansprüche

1. Zahnwurzelkanal-Spitze (1) aus Faser-verstärkten Kunststoff, wobei die Fasern (2) im wesentlichen parallel zueinander angeordnet sind und im Kunststoff nur soweit zusammengehalten werden, dass eine notwendige Flexibilität zum Folgen der Krümmung des zahnwurzelkanals (4) erhalten bleibt und Fasern (2) oder Faserstränge in seitliche Risse im Zahnwurzelkanal (4) einzudringen vermögen.

2. Zahnwurzelkanal-Spitze (1) nach Anspruch 1, **dadurch gekennzeichnet, dass** die Fasern (2) Glasfasern sind.

3. Zahnwurzelkanal-spitze (1) nach Anspruch 1 oder 2, **dadurch gekennzeichnet, dass** die Faser (2) mit einer Kunststoffschicht, vorzugsweise Vinyl-Silan, ummantelt und in Kunstharz zusammengehalten werden.

4. Zahnwurzelkanal-Spitze (1) nach einem der Ansprüche 1 bis 3, **dadurch gekennzeichnet, dass** die im Zahnwurzelkananal (4) mit Knochenzement befestigte Zahwurzelkanal-Spitze (1) und der Knochenzement etwa das gleiche Elastizitätsmodul aufweisen wie der Zahn (3).

## Claims

1. Root canal point (1) of fibre-reinforced synthetic material where the fibres (2) are arranged in parallel to each other essentially and are only held together in the synthetic material to such an extent that a required flexibility for conforming to the curvature of the root canal (4) is preserved and that fibres (2) or fibre strands are able to enter into fissures in the root canal (4).

2. Root canal point (1) according to claim 1, **characterised in that** the fibres (2) are glass fibres.

3. Root canal point (1) according to claim 1 or 2, **characterised in that** the fibres (2) are coated with a synthetic layer, preferably vinyl silane, and held together in synthetic resin.

4. Root canal point (1) according to one of claims 1 to 3, **characterised in that** the root canal point (1) that is secured in the root canal (4) with bone cement and the bone cement have approximately the same modulus of elasticity as the tooth (3).

## Revendications

1. Pointe pour canal radiculaire (1) en matériau synthétique renforcé de fibres où les fibres (2) sont disposées essentiellement parallèlement et ne sont tenues ensemble dans le matériau synthétique que dans la mesure qu'une flexibilité requise pour suivre la courbure du canal radiculaire (4) soit conservée et que des fibres (2) ou faisceaux de fibres puissent rentrer dans des fissures du canal (4) radiculaire.

2. Pointe pour canal radiculaire (1) selon la revendication 1, **caractérisée en ce que** les fibres (2) sont des fibres de verre.

3. Pointe pour canal radiculaire (1) selon la revendication 1 ou 2, **caractérisée en ce que** les fibres (2) sont revêtues d'une couche de matériau synthétique, préférablement de silane de vinyle, et tenues ensemble dans une résine synthétique.

4. Pointe pour canal radiculaire (1) selon la revendication 1 à 3, **caractérisée en ce que** la pointe pour canal radiculaire (1), fixée dans le canal radiculaire (4) à l'aide de ciment osseux, et le ciment osseux présentent approximativement le même module d'élasticité que la dent (3).
